# EUROPÄISCHE PATENTSCHRIFT

(11) **EP 0 625 465 B1**
(45) Veröffentlichungstag und Bekanntmachung des Hinweises auf die Patenterteilung: **12.03.1997**
(21) Anmeldenummer: 93114998.3
(22) Anmeldetag: 17.09.1993
(51) Int. Cl.: B65B 69/00

(54) **Verfahren und Vorrichtung zum Entfernen einer sichernden und/oder schützenden Folie**
Method and device for removing a fastening or protective sheeting
Procédé et dispositif pour éliminer une feuille en matière plastique de protection ou de sécurité

(30) Priorität: 07.04.1993 DE 4311421
(43) Veröffentlichungstag der Anmeldung: 23.11.1994
(73) Patentinhaber: ERAPA-CEKA Maschinenbau und -handel GmbH, D-46446 Emmerich (DE)
(72) Erfinder: Grefrath, Knut, Dipl.-Ing., D-41189 Mönchengladbach (DE); Wanders, Willy, D-46339 Bocholt (DE); Berns, Heinz, D-47574 Goch (DE)
(74) Vertreter: Stenger, Watzke & Ring Patentanwälte

(56) Entgegenhaltungen:
- EP-A- 0 142 846
- DE-C- 3 443 362
- US-A- 3 889 442
- US-A- 5 048 267

## Beschreibung

Die Erfindung betrifft ein Verfahren zum Entfernen einer sichernden und/oder schützenden Folie von einem auf einer Palette und insbesondere auf einer Normpalette aufliegenden Warenstapel, bei dem der mit der Folie versehene Warenstapel einer Trennstation zugeführt wird, in der die Folie zunächst an mindestens einer Stelle erfaßt, dann vollständig von den Seitenflächen des Warenstapels und der Palette getrennt und schließlich einem Sammelbehälter zum Zwecke der Entsorgung zugeführt wird.

Die Erfindung betrifft ferner eine Vorrichtung zum Entfernen einer sichernden und/oder schützenden Folie von einem auf einer Palette und insbesondere auf einer Normpalette aufliegenden Warenstapel, mit horizontal verfahrbaren Mitteln zum Erfassen der Folie sowie mit Trennelementen zum vollständigen Trennen der Folie von den Seitenflächen des Warenstapels.

Der Warentransport vom Hersteller zum Abnehmer erfolgt heute vielfach in palettierter Form, wobei die Waren auf einer in der Regel normierten Palette aufliegen und der so gebildete Warenstapel im Herstellerwerk mit einer haubenförmigen Folie umgeben wird. Hierbei kommen in erster Linie Schrumpffolien zur Anwendung, welche aus einem sich unter Wärme zusammenziehenden Material bestehen. In der Verpackungsstation des Herstellers werden diese Folien über den auf der Palette angeordneten Warenstapel gebracht und anschließend der erforderlichen Schrumpftemperatur ausgesetzt, wobei sich die Folie an den Warenstapel sowie die Palette anlegt und damit zur Transportsicherung beiträgt. Ferner kann die Folie auch einen Schutz der umschlossenen Waren oder Güter, etwa vor Feuchtigkeit, bilden.

Während das Aufbringen der Folie in der Regel vollautomatisch abläuft, muß der Warenstapel nach Ankunft beim Abnehmer und vor der Entnahme und weiteren Verteilung der Einzelwaren von Hand von der Folie befreit werden. Hierzu wird diese in der Regel an einer der Seitenflächen mit einem Handmesser aufgeschlitzt und dann Stück für Stück vom Warenstapel abgezogen. Als besonders schwierig erweist sich hierbei der bis unter die Palette reichende Bereich der Folie, welcher im Fall der Verwendung von Heißschrumpffolie als "Unterschrumpf" bezeichnet wird. Auf diesem liegt das gesamte Gewicht des Warenstapels auf, so daß dieser Teil der Folie nur unter großen Schwierigkeiten entfernt und einer anschließenden Entsorgung zugeführt werden kann.

Als Ausgangspunkt der Erfindung ist ein Verfahren sowie eine Vorrichtung anzusehen, wie sie in der EP-A-0 142 846 offenbart sind. Der auf einer Palette aufliegende und mit einer schützenden Folie umgebende Warenstapel wird über Förderelemente in eine Trennstation gefahren, in der anschließend die Folie durch mehrere Schnitte in einzelne Teile aufgetrennt wird. Die Schnitte werden mit Hilfe von Hitzedrähten durchgeführt, die über die Folie fahren, und diese hierbei thermisch auftrennen. Eine erste Gruppe an Hitzedrähten wird knapp unterhalb der Oberseite des Warenstapels horizontal an den Seitenflächen vorbeigeführt, so daß ein Trennschnitt zwischen den noch zusammenhängenden Seitenflächen der Folie, und der nun eine flache Haube bildenden Oberseite der Folie entsteht. Anschließend wird ein weiterer horizontaler Trennschnitt in Höhe der Trennebene zwischen Palette und Warenstapel durchgeführt. Anschließend erfolgen an zwei einander gegenüberliegenden Seitenflächen der Folie vertikale Trennschnitte, so daß schließlich im Bereich der Seitenflächen zwei vollständig freigeschnittene Folienhälften vorliegen, die von mit Greifern versehenen, schwenkbaren Armen ergriffen und Entsorgungsbehältern zugeführt werden, die sich beidseits der Vorrichtung befinden. Es können mit diesem Verfahren zwar große Teile der Folienhaube, jedoch nicht die Folienhaube insgesamt entsorgt werden. Vielmehr ist vorgesehen, daß der infolge der horizontalen Schnitte auf der Oberseite des Warenstapels verbliebene Foliendeckel erst später von Hand entfernt wird. Dies gilt ebenso für den rund um die Palette verbleibenden, unteren Folienrand. Nachteilig ist bei diesem Stand der Technik die Verwendung von Hitzedrähten, die während des Zerschneidens der Folie unmittelbar über diese geführt werden. Hierdurch kann eine Beschädigung empfindlicher Ware auftreten.

Schließlich kann es zu Problemen während des Ergreifens der bereits aufgetrennten Folie durch die schwenkbaren Arme kommen. Die Folie, die bis zu diesem Zeitpunkt mit ihrer gesamten Fläche an dem Warenstapel anliegt, kann dort haften, so daß es durch deren plötzlich einsetzendes, flächiges Abziehen zu Beschädigungen oder zu Verschiebungen der Ladung kommen kann.

In der US-A-5,048,267 ist ein Verfahren beschrieben, um Warenverpackungen aus quaderförmigen Kartonagen maschinell zu öffnen. Hierzu werden u.a. Saugorgane eingesetzt, die, nach Durchführung eines ersten Schnittes mittels eines Messers, einen Teil einer Wand der Verpackung geringfügig nach außen spreizen, um einen Spalt zu erzeugen. In diesen Spalt fährt anschließend ein schmales, mit einem Längsschlitz versehenes Schwert ein. Das Schwert dient hierbei als Stützfläche für ein entlang des Längsschlitzes geführtes Trennmesser. Zur Durchführung einer Vielzahl weiterer Trennschnitte ist die Verpackung als ganzes um 90° verschwenkbar. Mit dem Verfahren gemäß US-A-5,048,267 lassen sich daher nur solche Verpackungen öffnen, die nicht an eine bestimmte Lage gebunden sind. Für Paletten mit darauf aufliegenden Warenstapeln ist dieses Verfahren demgemäß nicht anwendbar.

Ausgehend von einem Verfahren gemäß EP-A-0 142 846 liegt der Erfindung die **Aufgabe** zugrunde, ein Verfahren zum Entfernen einer sichernden und/oder schützenden Folie von einem auf einer Palette aufliegenden Warenstapel zu schaffen, mit dem sich die Folie besonders schonend vom Warenstapel entfernen läßt.

Zur **Lösung** dieser Aufgabe wird hinsichtlich des Verfahrens vorgeschlagen, daß die Folie zunächst durch Saugorgane erfaßt und durch Zurückziehen der Saugorgane bereichsweise von der Oberfläche des Warenstapels und/oder der Palette gelöst und abgehoben wird, daß anschließend mindestens ein Trennelement innerhalb des Spaltes zwischen der Seitenwand des Warenstapels und der Folie langsam nach oben fährt und daß das Trennelement während des Hochfahrens die Folie zunehmend von dem Warenstapel löst.

Hinsichtlich der Vorrichtung wird zur **Lösung** der Aufgabe vorgeschlagen, daß die Mittel Saugorgane zum Erfassen und anschließenden bereichsweisen Aufweiten der Folie sind, daß die Trennelemente vertikal in den Spalten zwischen den Seitenwänden des Warenstapels und der Folie verfahrbar sind, und daß mindestens eine Greifeinrichtung vorgesehen ist, mit der sich die Folie zum Zwecke der späteren Entsorgung an ihrer Oberseite als Ganzes erfassen läßt.

Mit einem solchen Verfahren bzw. einer solchen Vorrichtung ist ein ausschließlich maschinelles Entfernen einer als Schutz- bzw. Transportsicherung dienenden Folie von einem auf einer Palette aufliegenden Warenstapel möglich. Insbesondere an Plätzen mit hohem Warenumschlag läßt sich auf diese Weise das von Hand sehr mühsame Entfernen der Folie besonders wirtschaftlich und schonend durchführen. Nach einem ersten bereichsweisen Lösen der Folie fährt mindestens ein Trennelement in den aufgeweiteten Teil der Folie ein, und das Trennelement wird anschließend innerhalb des Spaltes zwischen der Seitenwand des Warenstapels und der Folie verfahren.

Die Trennung der Folie von dem Warenstapel sowie der Palette läßt sich wesentlich erleichtern, indem die Folie im Bereich der senkrechten Kanten des Warenstapels durch Zufuhr von Wärme geschwächt wird, vorzugsweise durch partielle Plastifizierung. Die Folie reißt hierbei an den senkrechten Kanten ein, so daß die so gebildeten Seitenflächen der Folie unabhängig voneinander von der jeweiligen Seitenfläche des Warenstapels gelöst werden können.

Das Lösen der Folie wird insbesondere durch den unterhalb der Palette anliegenden Unterschrumpf erschwert. Mit einer Ausgestaltung des Verfahrens wird daher vorgeschlagen, daß die Palette mit dem aufliegenden Warenstapel in der Trennstation durch eine vertikale Relativbewegung gegenüber ihrer Unterlage zumindest so weit freigestellt wird, daß die mit Folie bedeckte Unterseite der Palette nicht mehr an der Unterlage anliegt.

Bei einer Weiterbildung des Verfahrens wird die jeweilige Folienseite während des vertikalen Verfahrens des Trennelementes an ihrem unteren Rand festgehalten. Die Folienseite bzw. Folienbahn kann dann nicht während des Trennprozesses mit nach oben gezogen werden. Von Vorteil ist es in diesem Zusammenhang auch, wenn die Folie auf der Oberseite des Warenstapels zumindest für die Dauer des vertikalen Verfahrens des Trennelementes durch einen Niederhalter festgehalten wird.

Der mittels der Saugorgane angesaugte und anschließend nach außen hin aufgeweitete Bereich der Folie wird vorzugsweise von einer Schneide eines Greifers oder einer Lanze durchstochen oder durchschnitten, wobei anschließend eine weitere Aufweitung der Folie durch eine nach außen gerichtete Bewegung des Greifers bzw. der Lanze erfolgt.

Das Verfahren läßt sich dadurch weiterbilden, daß die Folie auf der Oberseite des Warenstapels zunächst bereichsweise angesaugt und angehoben wird, bevor in den angehobenen Bereich mindestens ein Greiforgan unter Durchstechen oder Durchschneiden der Folie einfährt und die Folie insgesamt von der Oberseite des Warenstapels abhebt. Vorzugsweise wird während des bereichsweisen Ansaugens ein Teil der die Oberseite des Warenstapels bedekkenden Folie niedergehalten. Von Vorteil ist es hierbei, wenn während des Lösens der Folie von der Oberseite des Warenstapels der Warenstapel durch senkrecht verfahrbare Niederhalter-Stempel fixiert wird.

In einer bevorzugten Weiterbildung des Verfahrens ist ferner vorgesehen, daß die Folie insgesamt von dem Warenstapel und der Palette getrennt wird, indem eine vollständige Folienseite bis auf Palettenhöhe angehoben und die Palette mit dem Warenstapel durch die so geschaffene seitliche Öffnung herausgefahren wird.

Bei Warenstapeln, die aus lose in einzelnen Lagen angeordneten Gegenständen, z.B. Glasflaschen für die Verwendung in Abfüllbetrieben, bestehen, kann beim Trennen der Folie vom Warenstapel oder dem anschließenden Entfernen der Folie als Ganzes nicht ausgeschlossen werden, daß einzelne Gegenstände von der Folie erfaßt werden und herunterfallen. Dies betrifft insbesondere die in der obersten Ebene des Warenstapels in Randbereich gelagerten Waren, die häufig infolge des vorangegangenen Transportes zum Rand hin verrutscht sind. Um die geschilderten Probleme zu vermeiden, wird gemäß einer Variante des Verfahrens vorgeschlagen, daß nach Zuführen des Warenstapels in die Trennstation die einzelnen Lagen des Warenstapels zunächst zentriert werden, bevor die Folie von dem Warenstapel getrennt wird. Diese Zentrierung kann aber auch oder auch zusätzlich dann erfolgen, bevor die Folie schließlich ganz von dem Warenstapel entfernt wird.

In Weiterbildung der erfindungsgemäßen Vorrichtung wird vorgeschlagen, daß nahe der Seitenflächen des Warenstapels vertikal sowie horizontal verfahrbare Lanzen angeordnet sind, deren nach unten gerichtetes, freies Ende als Schneide zum Durchstechen oder Durchstoßen des von den Mitteln partiell aufgeweiteten Bereiches der Folie ausgebildet ist.

Bei einer Variante der Vorrichtung ist hierbei der vertikale Bewegungsbereich der Lanze so groß dimensioniert, daß die Schneide während des Absenkens die Höhe der Trennebene zwischen Palette und darauf aufliegendem Warenstapel durchfährt und eine dort gegebenenfalls vorhandene Bodenfolie sicher durchsticht. Auf diese Weise läßt sich die Vorrichtung euch bei solchen Warenstapeln einsetzen, bei denen zwischen der Palette und der darauf aufliegenden Ladung eine durchlässige oder undurchlässige Bodenfolie oder ein Bodenblatt angeordnet ist. Eine solche Bodenfolie verklebt während des Schrumpfprozesses mit der den Warenstapel umhüllenden Folie und kann daher bei dem Entfernen dieser Folie zu erheblichen Schwierigkeiten führen. Diese Schwierigkeiten werden vermieden, wenn die Schneide in der zuvor genannten Art und Weise die Höhe der Trennebene zwischen Palette und darauf aufliegendem Warenstapel durchfährt. In diesem Fall durchsticht die sich bereits zwischen Folie und Warenstapel befindende Lanze auch noch die Bodenfolie, so daß die Folie anschließend mit einer nach außen gerichteten Kraft beaufschlagt werden kann, bis sie sich von der Palette löst.

Um hierbei zu verhindern, daß die Lanze die Folie zerstört, ist gemäß einer bevorzugten Ausgestaltung die Lanze an ihrer dem Warenstapel abgewandten Seite als vertikale Fläche ausgebildet, die nach unten hin über eine Wölbung in die Schneide übergeht.

Bei einer bevorzugten Ausgestaltung der Vorrichtung sind an allen vier Seiten des Warenstapels Greifer zum Festhalten des unteren Randes der Folie angeordnet. Von Vorteil ist, wenn zumindest einige der Greifer jeweils aus zwei zueinander beweglichen Greifbacken bestehen, zwischen denen sich der untere Rand der Folie einklemmen läßt.

Das Trennen der einzelnen Folienseiten von dem Warenstapel wird wesentlich erleichtert, wenn mindestens ein entlang der senkrechten Kanten des Warenstapels verfahrbares Heizelement vorgesehen ist, welches die Folie ausschließlich im Bereich dieser Kanten mit Wärme beaufschlagt. Die Folie plastifiziert hierdurch im Kantenbereich, so daß sich aneinandergrenzende Seitenflächen der Folie voneinander lösen.

Dieser Prozeß läßt sich wirkungsvoll dadurch unterstützen, daß der Ort der Wärmebeaufschlagung durch das Heizelement jeweils oberhalb des Trennelements liegt und Heizelement sowie Trennelement gemeinsam vertikal entlang des Warenstapels verfahrbar ausgebildet sind.

Vorzugsweise befinden sich Trennelemente an zumindest zwei Seiten des Warenstapels, wobei jedes Trennelement mindestens so lang wie die Breite der betreffenden Seite des Warenstapels ist. Von Vorteil ist es ferner, drehbare, langgestreckte Walzen als Trennelemente zu verwenden.

Um Warenstapel mit lose aufliegenden Gütern, z.B. Glasflaschen, vor dem eigentlichen Trennprozeß zu zentrieren, sind bei einer alternativen Ausführungsform der Vorrichtung parallel zu den Seitenflächen des Warenstapels angeordnete und an diesen entlang verfahrbare Ausrichtelemente vorgesehen. Die Ausrichtelemente sind vorzugsweise an einem um den Warenstapel herum angeordneten Rahmen angeordnet, an dem ebenfalls die Mittel zum Erfassen der Folie sowie die Trennelemente angeordnet sind. Hierbei ist es von zusätzlichem Vorteil, wenn zumindest ein Teil der Ausrichtelemente eine doppelte Funktion übernimmt und zugleich als Trennelement dient.

Ferner kann ein Wegbegrenzer zur Begrenzung der Verfahrbarkeit des Saugorgans vom Warenstapel weg vorgeschlagen.

Ferner kann vorgesehen sein, daß die Greifeinrichtung oberhalb des Warenstapels angeordnet ist und mit vertikal verfahrbaren Saugorganen sowie Greiforganen versehen ist.

Schließlich kann mindestens ein relativ zu den Greiforganen und/oder Saugorganen vertikal verfahrbarer Niederhalter-Stempel vorgesehen sein, der auf der Oberseite des Warenstapels mit Stützfüßen anliegen kann.

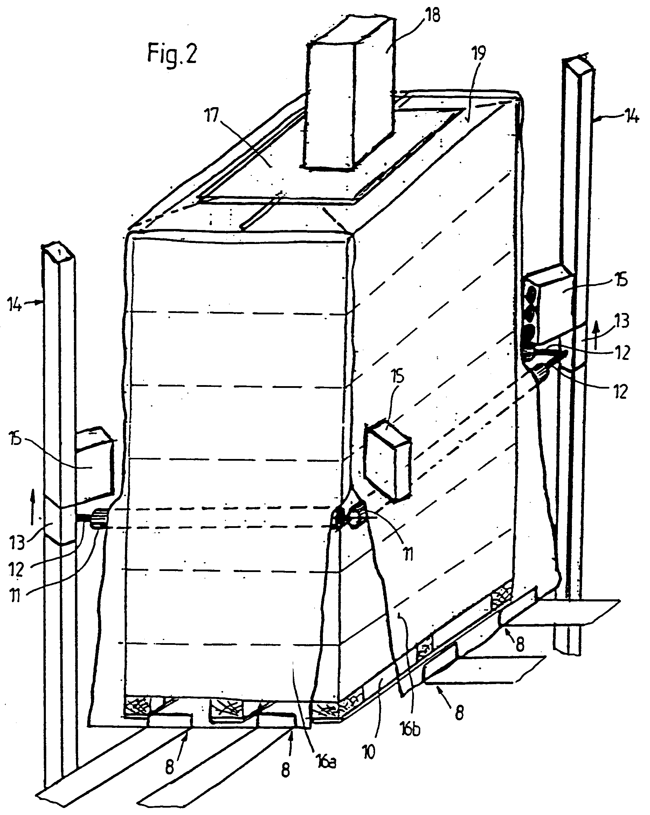

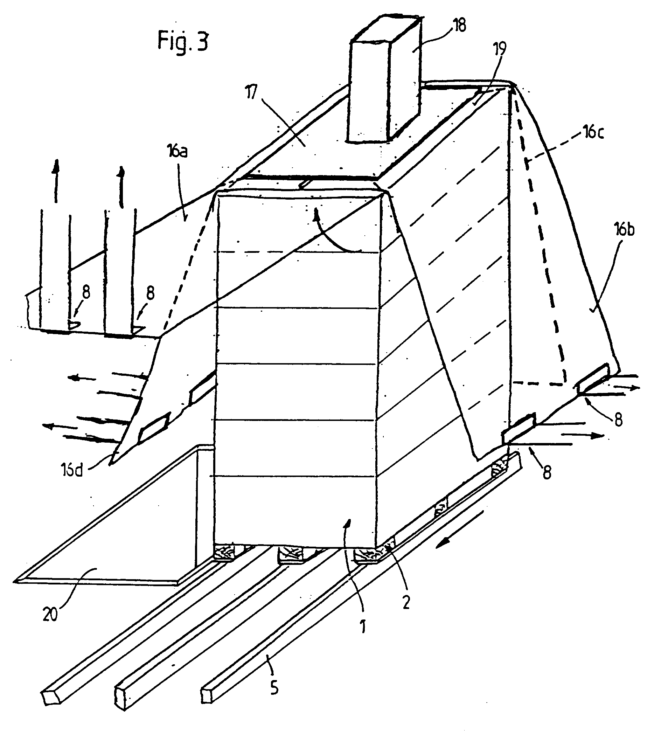

Weitere Einzelheiten und Vorteile des Gegenstandes der Erfindung ergeben sich aus der nachfolgenden Beschreibung der zugehörigen Zeichnungen, in denen, mit Ausnahme der Figuren 2 und 3, eine mögliche Ausgestaltung des Verfahrens sowie der dabei verwendeten Vorrichtung dargestellt ist. In den Zeichnungen zeigen:
- Fig. 1: In perspektivischer Darstellung einen auf einer Palette aufliegenden, mit einer Folie umgebenen Warenstapel auf einer Transportbahn;
- Fig. 2: den Warenstapel in der Trennstation während des teilweisen Entfernens der Folie;
- Fig. 3: den Warenstapel innerhalb der Trennstation vor dem endgültigen Entfernen der Folie;
- Fig. 4: in einer Seitenansicht eine neben einem Warenstapel angeordnete maschinelle Einrichtung zum Ergreifen der Folie in einer gegenüber den Ausführungsformen Figuren 1 bis 3 geänderten Ausführungsform;
- Fig. 5: die maschinelle Einrichtung gemäß Fig. 4 in einem anderen Verfahrensstadium;
- Fig. 6: die maschinelle Einrichtung gemäß Fig. 4 in einem wiederum anderen Verfahrensstadium;
- Fig. 7: eine oberhalb des Warenstapels angeordnete Greifeinrichtung in einer gegenüber den Ausführungsformen gemäß den Figuren 1 bis 3 geänderten Ausführungsform;
- Fig. 8: die Greifeinrichtung gemäß Fig. 7 in einem anderen Verfahrensstadium;
- Fig. 9: die Greifeinrichtung gemäß Fig. 7 in einem wiederum anderen Verfahrensstadium;
- Fig. 10: in einer teilweise geschnittenen Seitenansicht eine neben einem Warenstapel angeordnete maschinelle Einrichtung zum Ergreifen der Folie in einer gegenüber den Ausführungsformen Fig. 1 bis 9 abewandelten, dritten Ausführungsform und
- Fig. 11-18: die maschinelle Einrichtung gemäß Fig. 10 während verschiedener Verfahrensstadien.

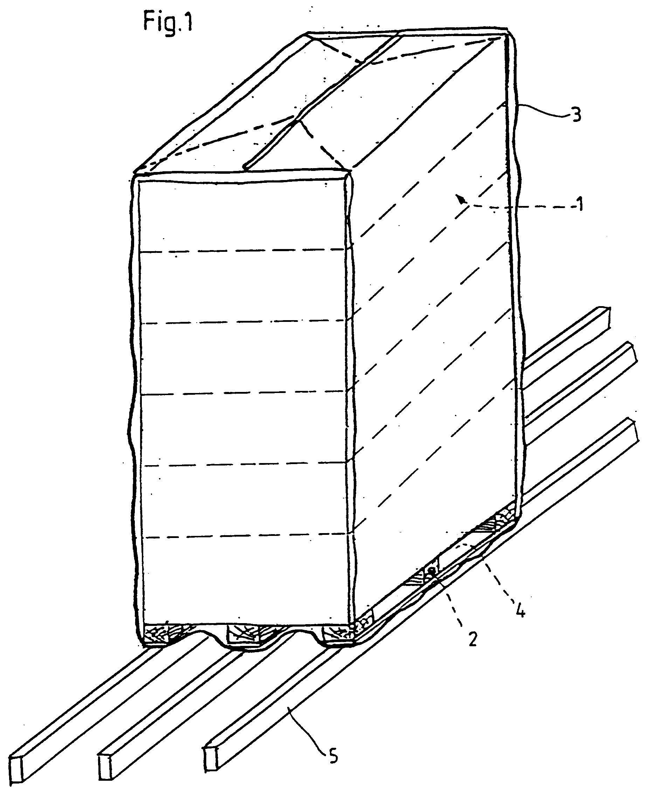

Der in Fig. 1 dargestellte Warenstapel 1 liegt auf einer Palette 2 auf, mit deren Seiten er vorzugsweise auch bündig abschließt. Zum Schutz sowie zur Transportsicherung des Warenstapels 1 ist dieser nach Art einer Haube mit einer Folie 3 versehen, die den Warenstapel 1 selbst, die Seitenflächen der Palette 2 sowie zumindest die Randbereiche der Unterseite der Palette 2 bedeckt. Da die Folie 3 demgemäß bis unter die Palette 2 reicht, erhält sie den genügenden Halt, um die auf der Palette 2 aufliegenden Waren gegen ein Hinunterfallen, Kippen etc. zu sichern. Bei der Folie 3 handelt es sich vorzugsweise um eine Schrumpffolie, jedoch läßt sich die Erfindung auch bei Warenstapeln mit anderen Arten von Folien realisieren.

Die in Fig. 1 dargestellte Palette 2 ist eine Normpalette mit insgesamt drei Kufen 4, die auf einer Transportbahn 5 aufliegen. Mit Hilfe der Transportbahn 5, beispielsweise eines Kettenförderers, kann der Warenstapel 1 einer Trennstation zugeführt werden, deren Aufgabe und Funktion nachfolgend erläutert wird.

In der Trennstation wird der Warenstapel 1 zunächst mittels einer Hubeinrichtung 6 so weit angehoben, daß sich die teilweise mit Folie 3 überzogene Unterseite der Palette 2 von der in Fig. 3 aus Übersichtsgründen nicht dargestellten Transportbahn abhebt. Dabei greifen Stützen 7 der Hubeinrichtung an solchen Stellen unter die Palette 2, die nicht von Folie 3 überzogen sind.

Die Folie 3 wird zunächst mittels Saugorganen erfaßt, wie später noch im einzelnen erläutert werden wird. In der Darstellung gemäß Figuren 2 und 3 kommen statt der Saugorgane Greifer 8 zur Anwendung. Die Verwendung derartiger Greifer ist allerdings von den Ansprüchen nicht umfaßt, so daß die Figuren 2 und 3 lediglich zur grundsätzlichen Erläuterung des Verfahrensablaufs sowie zur Veranschaulichung der walzenförmigen Trennelemente und deren Wirkungsweise dienen.

Nachdem sämtliche Greifer 8 die Folie erfaßt heben, werden sämtliche Greifer 8 entgegen der in Fig. 2 dargestellten Richtung der Pfeile zurückgezogen. Dabei löst sich die Folie 3 von der Unterseite sowie den Seitenflächen der Palette 2 und es entsteht durch die Dehnung der Folie 3 in diesem Bereich ein Spalt zwischen den Innenflächen der Folie 3 und den Seitenflächen des Warenstapels 1. Dieser Spalt allerdings bedeckt allenfalls den untersten Teil des Warenstapels 1, während die Folie 3 auf der überwiegenden Fläche des Warenstapels 1 noch fest haftet. Durch die Herstellung von Spalten zwischen Folie 3 und Warenstapel 1 in dessen unterem Bereich ist nun allerdings die Möglichkeit gegeben, Trennelemente in diese Spalte einzufahren.

In Fig. 3 sind diese, für alle vier Seitenflächen des Warenstapels 1 vorgesehenen Trennelemente 11 näher dargestellt. Bei den Trennelementen 11 handelt es sich um frei drehbar gelagerte Walzen, deren Länge die Breite der betreffenden Seite des Warenstapels 1 übersteigt. Jedes der vier Trennelemente 11 verfügt über Drehachsen 12, die in vertikal verfahrbaren Lagerungen 13 frei drehbar angeordnet sind. Zur vertikalen Verstellbarkeit der Lagerungen 13 sind diese entlang insgesamt vier Ständern 14 motorisch verfahrbar. Die Ständer 14 sind fester Bestandteil der Trennstation und sind bei den Darstellungen gemäß der Figur 3 lediglich aus Übersichtsgründen weggelassen. Als Trennelemente kommen auch andere Elemente als Walzen in Betracht, z.B. in den gebildeten Spalt einführbare Trennschwerter.

Fig. 2 läßt erkennen, daß, während die Greifer 8 den unteren Rand der Folie 3 festhalten, die walzenförmigen Trennelemente 11 langsam nach oben gefahren werden, was in Fig. 2 durch die Pfeile an den Lagerungen 13 angedeutet ist. Hierbei reißt die Folie 3 im Bereich der Ecken sowie der vertikalen Kanten zunehmend ein. Dies kann beispielsweise jeweils durch ein oberhalb der Lagerung 13 angeordnetes Messer erreicht werden. Beim Ausführungsbeispiel nach Fig. 2 hingegen wird jeweils ein Heizelement 15 verwendet, welches seine Wärme ausschließlich auf den Kantenbereich oberhalb der Trennelemente 11 bzw. der Lagerung 13 überträgt. Infolge der Heizenergie wird die Folie 3 in diesem Kantenbereich geschwächt, so daß sie während des Hochfahrens der Trennelemente 11 leicht einreißt. Um sicherzustellen, daß jedes der Heizelemente 15 stets eine Position geringfügig oberhalb der betreffenden Trennelemente 11 einnimmt, sind die Heizelemente 15 beim Ausführungsbeispiel oberhalb der Lagerungen 13 befestigt, lassen sich also gemeinsam mit diesen entlang der Ständer 14 hochfahren. Die zunächst noch auf den Seitenflächen des Warenstapels 1 haftende Folie 3 wird also zunehmend von den Seiten des Warenstapels 1 gelöst, indem die vier Trennelemente 11 hochfahren und durch die Schwächung der Folie im vertikalen Kantenbereich zugleich die Folie an diesen Stellen einreißt. Hierbei gewährleisten die Greifer 8 eine dauernde Zugkraft auf die nunmehr entstehenden vier Folienseiten 16a,16b, wobei diese Zugkraft an den Trennelementen 11 gewissermaßen umgelenkt wird und damit zu einem Abziehen der Folienseiten 16a,16b von den Seitenflächen des Warenstapels 1 führt.

Während des genannten Lösens der Folienseiten 16a,16b wird eine mit einer Platte 17 versehene Greifeinrichtung 18 von oben auf die Oberseite 19 des Warenstapels 1 abgesenkt. Die Platte 17 ist kleiner als die Oberseite 19 des Warenstapels 1 und verbessert das Verhalten der Folie 3 während des Ablösens der Folienseiten 16a,16b von den Seitenflächen des Warenstapels 1. Insbesondere übt die Greifeinrichtung 18 mit der daran befestigten Platte 17 einen Druck auf den Warenstapel 1 aus, der verhindert, daß bei einem Warenstapel mit besonders leichten Waren, z.B. leeren Plexiglasflaschen, der gesamte Warenstapel 1 infolge der nach oben wirkenden Kraft der Trennelemente 11 abhebt.

In dem in Fig. 3 dargestellten Verfahrenstadium ist die Folie 3 an sämtlichen vertikalen Kanten aufgetrennt, so daß die einzelnen Folienseiten 16a,16b,16c,16d sich vollständig von den Seitenflächen des Warenstapels 1 gelöst haben. Durch eine besondere Ausbildung der Greifer 8 an der Vorderseite des Warenstapels 1 lassen sich diese in der in Fig. 3 dargestellten Art und Weise bis oberhalb der Oberseite 19 des Warenstapels 1 verschwenken, wodurch diese Seite des Warenstapels 1 vollständig freigelegt ist. Die Hubeinrichtung 6 wird dann abgesenkt und der Warenstapel 1 mittels der Transportbahn 5 aus der Trennstation herausgefahren. Hierbei fährt der Warenstapel 1 unter der von den entsprechenden Greifern 8 vollständig angehobenen Vorderen Folienseite 16a hindurch. Um ein Mitnehmen der Folie 3 zu vermeiden, sind an der Greifeinrichtung 18 Saugöffnungen angebracht, welche durch Erzeugen eines Unterdrucks die Oberseite der Folie 3 greifen und festhalten. Nachdem der Warenstapel 1 aus der Trennstation herausgefahren ist, wird die an einer Portalkonstruktion befestigte Greifeinrichtung 18 seitlich bis über einen Sammelbehälter 20 verschoben und die Greifeinrichtung freigegeben. Hierdurch löst sich die Folie 3 und gelangt zum Zwecke einer späteren Entsorgung in den Sammelbehälter 20. Die Trennstation ist dann zur Verarbeitung des nächsten, über die Transportbahn 5 herangeführten Warenstapels vorbereitet.

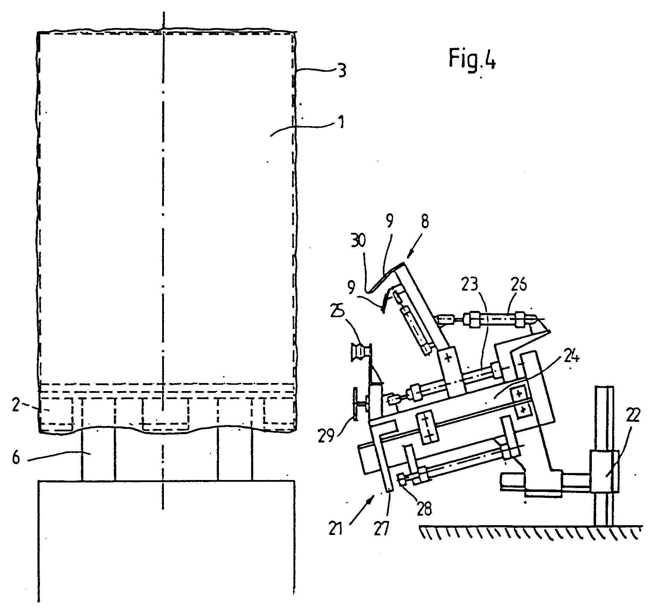

Nicht in allen Fällen läßt sich die Folie im Bereich des Palettenfußes sicher greifen. Oft ist die Folie in diesem Bereich zerstört, etwa durch die Zinken eines Gabelstaplers. In diesen Fällen wird das Ergreifen der Folie im Bereich des Palettenfußes mit dem nachfolgend anhand der Figuren 4 bis 6 erläuterten Verfahren durchgeführt.

Die maschinelle Einrichtung 21 zum Ergreifen der Folie ist an einem vertikal sowie horizontal verfahrbaren Support 22 angeordnet. Sie besteht aus einem leicht zur Horizontalen geneigten, mittels einer Kolben-Zylindereinheit 23 verfahrbaren Schlitten 24, auf dem der in diesem Fall verschwenkbar gelagerte Greifer 8 sowie ein Saugorgan 25 angeordnet sind. Die Verschwenkbewegung des Greifers 8 wird ebenfalls über eine Kolben-Zylindereinheit 26 erreicht. An der Unterseite der maschinellen Einrichtung 21 ist ein mit einem Anschlag 27 des Schlittens 24 zusammenwirkender, einstellbarer Wegbegrenzer 28 angeordnet.

Die in den Figuren 4 bis 6 dargestellte maschinelle Einrichtung 21 arbeitet wie folgt:

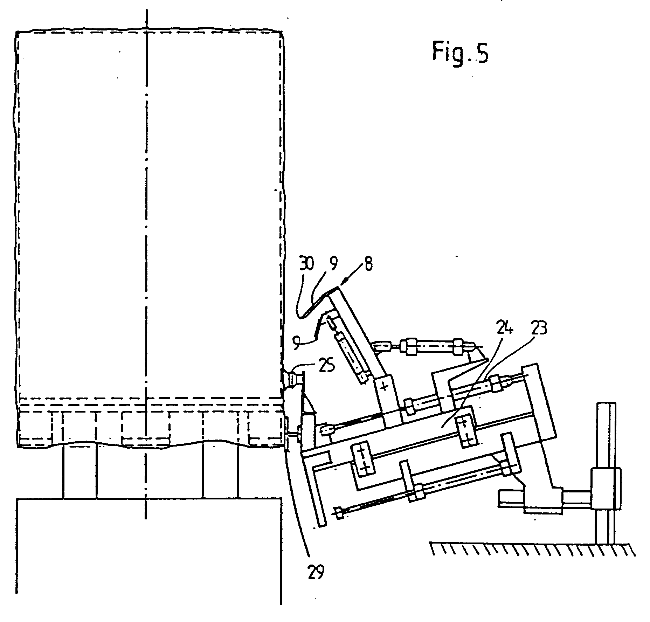

Bei mittels der Hubeinrichtung 6 ausgehobenem Warenstapel 1 wird durch Betätigung des Schlittens 24 dieser so weit gegen die Palette 2 gefahren, bis das mit einem Saugnapf versehene Saugorgan 25 an der Folie 3 knapp oberhalb der Palette 2 anliegt. Der richtige Abstand zur Seitenfläche des Warenstapels 1 wird hierbei durch ein an dem Schlitten 24 befestigtes Distanzstück 29 sichergestellt. Sobald Distanzstück 29 und Saugnapf des Saugorgans 25 an der Seitenfläche des Warenstapels 1 anliegen, wird in dem Saugorgan 25 pneumatisch ein Unterdruck erzeugt. Dieser Zustand ist in Fig. 5 dargestellt.

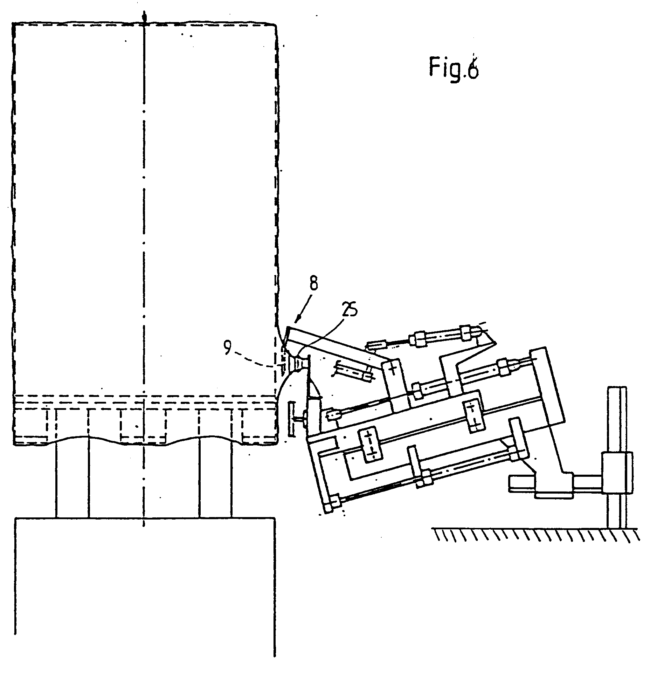

Anschließend wird unter Aufrechterhaltung des Unterdrucks der Schlitten 24 mittels der Kolben-Zylindereinheit 23 geringfügig zurückgezogen, wie dies in Fig. 6 dargestellt ist. Dieses Zurückziehen führt zu einem bereichsweisen Lösen und Aufweiten der Folie 3. In den auf diese Weise gelösten Bereich der Folie fährt anschließend eine an dem Greifer 8 ausgebildete Schneide 30 ein, wobei sie die in diesem Bereich gespannte Folie durchsticht bzw. durchschneidet. Die Schneide 30 befindet sich dabei nur an der dem Warenstapel 1 zugewandten Greifbacke 9 des Greifers 8, während eine gegen diese erste Greifbacke 9 verfahrbare weitere Greifbacke 9 über keine Schneide verfügt. Durch Betätigung der weiteren Greifbacke 9 mittels einer eigenen Kolben--Zylindereinheit werden die beiden Greifbacken 9 anschließend zusammengefahren, wobei sie die mittels des Saugorgans 25 gelöste Folie zwischen sich einklemmen.

Um ein Überdehnen der Folie und damit deren Einreißen zu vermeiden, wird der Rückweg des Schlittens 24 und damit der Weg des Saugorgans 25 begrenzt, indem der an dem Schlitten 24 befestigte Anschlag 27 gegen den einstellbaren Wegbegrenzer 28 fährt.

Anschließend wird die Trennung der Folie 3 von dem Warenstapel 1 in der in Fig. 2 dargestellten Art und Weise durchgeführt.

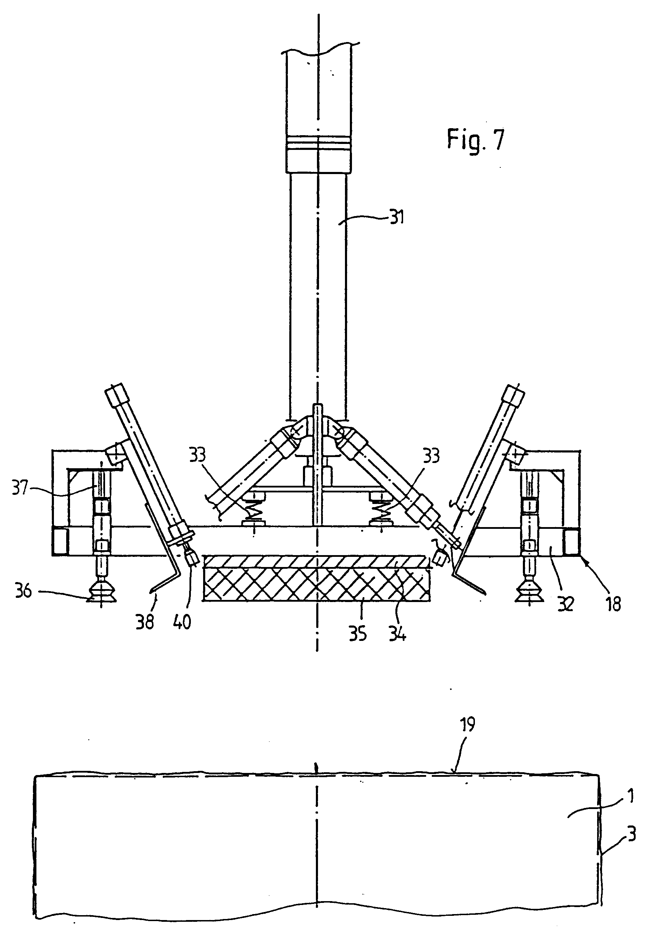

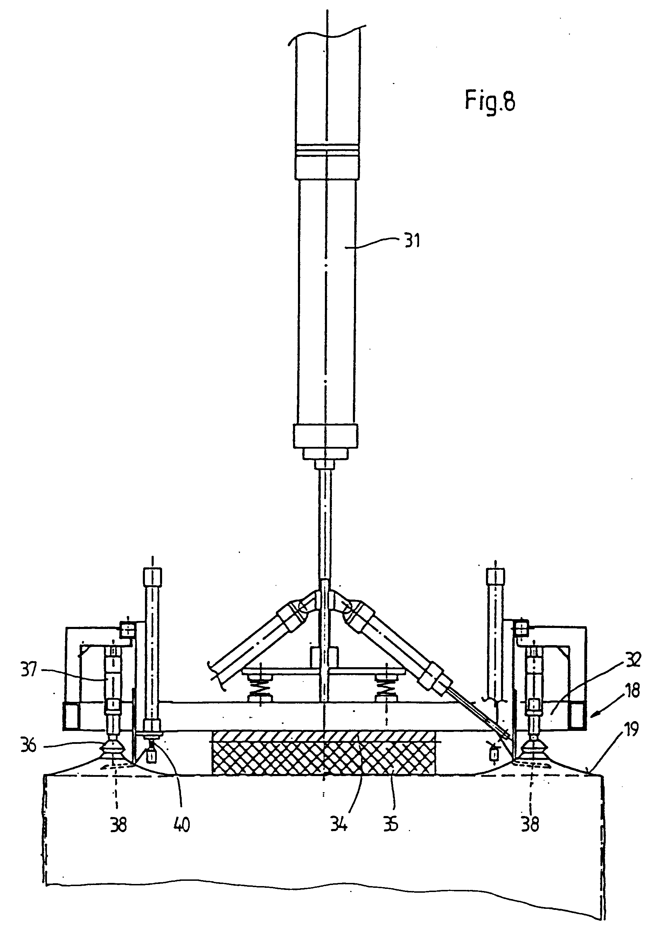

In den Figuren 7 bis 9 ist eine gegenüber den Figuren 1 bis 3 geänderte Ausführung der Greifeinrichtung 18 dargestellt. Am unteren Ende eines vertikal verfahrbaren Hauptzylinders 31 ist ein Rahmen 32 befestigt. Die Verbindung zwischen Hauptzylinder 31 und Rahmen 32 ist federnd unter Verwendung mehrerer Federn 33, so daß sich der Rahmen 32 nach dessen Absenken auf den Warenstapel 1 weitgehend der Neigung der Oberseite 19 anpassen kann. An der Unterseite des Rahmens 32 ist eine starre Platte 34 mit einer dem Warenstapel 1 zugewandten Schicht 35 aus elastischem Material, z.B. Schaumstoff, angeordnet. Platte 34 und elastische Schicht 35 bilden einen Niederhalter, der bei Absenken des Rahmens 32 auf der Oberseite 19 des Warenstapels 1 aufliegt, wie dies in Fig. 8 dargestellt ist.

An dem Rahmen 32 sind außerdem Saugorgane 36 befestigt, die, ebenso wie die Saugorgane 25 an den Seitenflächen des Warenstapels 1, die Folie bereichsweise mittels Unterdruck erfassen und in diesem Bereich lösen. Hierzu sind die Saugorgane 36 mittels z.B. eigener Hubzylinder 37 vertikal verstellbar am Rahmen 32 befestigt. Sobald durch Absenken des Hauptzylinders 31 die Platte 34 mit der Schicht 35 auf der Oberseite 19 des Warenstapels 1 anliegt, wird die Folie bereichsweise von den Saugorganen 36 ergriffen und in der in Fig. 8 dargestellten Art und Weise von der Oberseite 19 gelöst. Die Platte 34 mit der elastischen Schicht 35 stellt hierbei sicher, daß die Folie genügend Spannung aufweist, um von den Saugorganen 36 sicher gehalten zu werden.

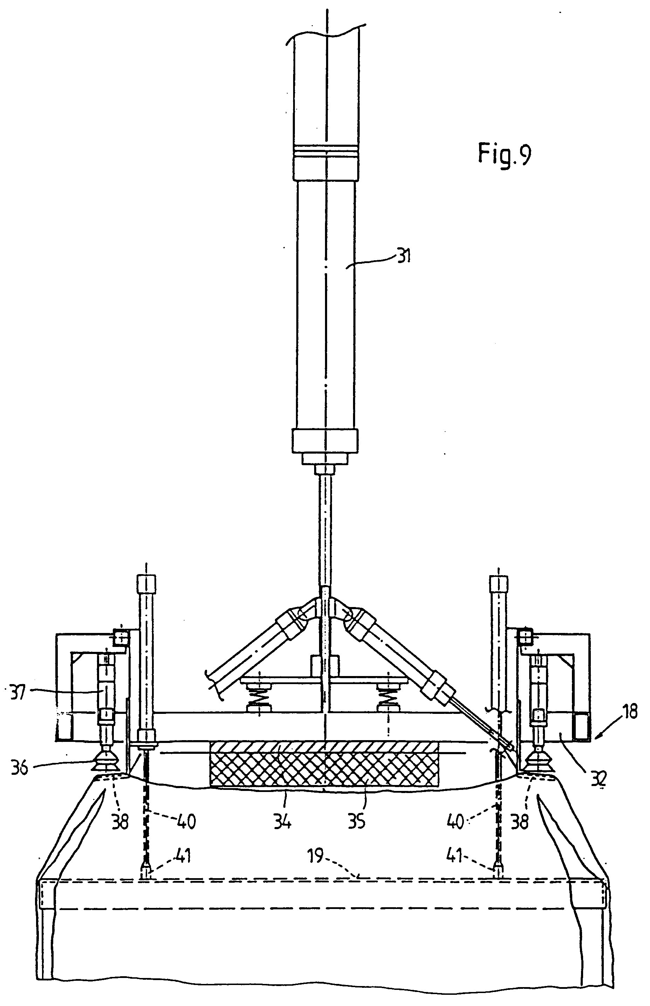

In den von der Oberseite 19 gelösten Bereich der Folie fahren anschließend verschwenkbare Messer 38 ein, wobei die Folie durchstochen bzw. durchstoßen wird. Die als Greiforgane dienenden Messer 38 weisen relativ große Flächen auf, welche sich in der in Fig. 8 dargestellten Endlage der Messer 38 parallel zur Oberseite 19 des Warenstapels 1 erstrecken. Durch anschließendes Anheben des Rahmens 32 greifen die Flächen der Messer 38 unter die Folie und heben diese an, was im einzelnen in Fig. 9 dargestellt ist.

Fig. 9 läßt ferner erkennen, daß am Rahmen 32 mehrere Niederhalter-Stempel 40 befestigt sind, welche mit ihren Stützfüßen 41 die Folie durchstechen und unmittelbar auf der Oberseite 19 des Warenstapels 1 aufliegen. Die Niederhalter-Stempel werden mit derselben Geschwindigkeit abgesenkt, mit der der Rahmen 32 anhebt, so daß sie den Warenstapel 1 mit einer dauernden Niederhaltekraft beaufschlagen. Hierdurch wird verhindert, daß die nach oben gezogene Folie 3 Teile des Warenstapels 1 mitnimmt, und damit dessen Stabilität gefährdet.

Die Folie 3 kann anschließend ganz von dem Warenstapel 1 abgehoben und dem in Fig. 3 dargestellten Sammelbehälter 20 zugeführt werden.

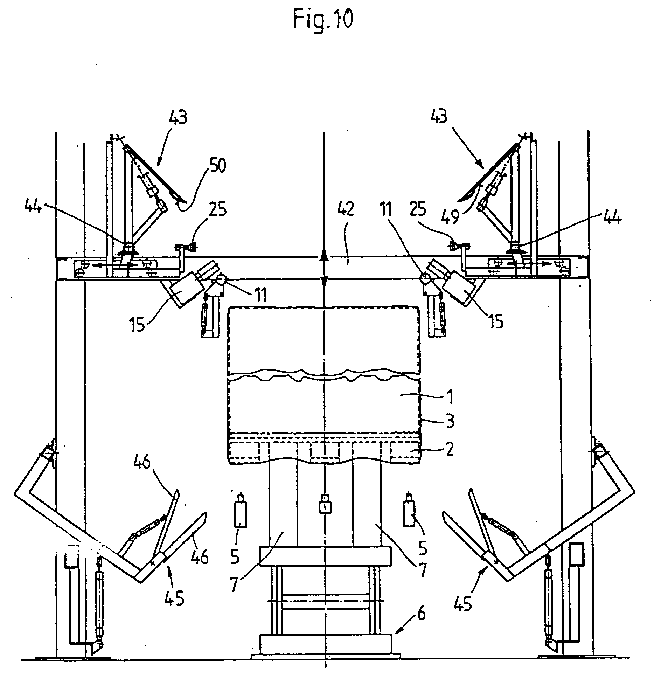

Ein weiteres Ausführungsbeispiel der Erfindung wird nunmehr anhand der Figuren 10 bis 18 erläutert. Hierbei kommt eine Greifeinrichtung zur Anwendung, wie sie bereits in den Figuren 7 bis 9 dargestellt ist. Die Änderungen gegenüber den bereits beschriebenen Ausführungsvarianten bestehen in der Art des Erfassens sowie Aufweitens der Folie.

Fig. 10 gibt eine Übersichtsdarstellung. Bei dieser Variante ist zunächst ein gemeinsamer Rahmen 42 vorgesehen, der den Warenstapel 1 allseitig umgibt und horizontal über die gesamte Höhe des Warenstapels 1 verfahrbar ist. An den Ecken des Rahmens 42 sind starr die insgesamt vier Heizelemente 15 in Gestalt elektrischer Gebläse befestigt. Die Saugorgane 25, welche sich an allen vier Seiten des Warenstapels 1 befinden, sind waagerecht verfahrbar am Rahmen 42 angeordnet. Hierzu ist eine geeignete Kolben-Zylinder-Einheit vorgesehen. Eine eben solche Kolben-Zylinder-Einheit dient dem horizontalen Antrieb mehrerer an dem Rahmen 42 angeordneter Lanzen 43. Auch die Lanzen 43 befinden sich an allen vier Seiten des Warenstapels 1. Neben ihrer horizontalen Verfahrbarkeit sind sie außerdem um ein Gelenk 44 verschwenkbar sowie durch Absenken des Rahmens 42 vertikal verfahrbar.

Die Lanzen 43 befinden sich in Ruhestellung oberhalb der Saugorgane 25. Die Lanzen 43 werden ausschließlich an ihrem oberen Ende gehalten und erstrecken sich über eine Länge von mindestens 25 cm. Ihr unteres Ende läuft in einer Schneide mit spezieller Formgebung zur Distanzhaltung gegenüber Warenstapel und Folie aus.

Schließlich sind an dem Rahmen 42 auch noch die langgestreckten, zylindrischen Trennelemente 11 angeordnet, und zwar mindestens ein Trennelement 11 auf jeder Längsseite des Warenstapels 1. Fig. 10 läßt erkennen, daß die Trennelemente 11 nicht starr, sondern verschwenkbar in Richtung auf den Warenstapel 1 gelagert sind. Hierzu ist ebenfalls eine Kolben-Zylinder-Einheit vorgesehen.

Aus Gründen der Übersichtlichkeit läßt Fig. 10 nicht erkennen, daß nicht nur an den Längsseiten des Warenstapels 1, sondern auch an dessen Schmalseiten Walzen angeordnet sind. Diese Walzen sind ähnlich ausgebildet und ähnlich gelagert wie die walzenförmigen Trennelemente 11.

Schließlich verfügt die Vorrichtung gemäß Fig. 10 über Greifer 45, die jedoch nicht am Rahmen 42, sondern am Fundament der Trennstation befestigt sind. Die dargestellten Greifer 45 befinden sich an den Längsseiten des Warenstapels in Höhe der Palette 2 und sind mit zwei schließbaren Greifbacken 46 versehen. Greifer sind auch an den Schmalseiten des Warenstapels 1 ausgebildet.

Der in Fig. 10 dargestellte Warenstapel weist gegenüber den zuvor dargestellten Warenstapeln einen wichtigen Unterschied auf. Zwischen der untersten Lage Waren und der Oberseite der Palette 2 befindet sich eine über die Ränder des Warenstapels 1 allseitig vorstehende Bodenfolie 47 oder ein entsprechendes Bodenblatt. Während des Schrumpfungsprozesses verschweißen bzw. verkleben solche Bodenfolien 47 mit der Folie 3, so daß die Waren von einer geschlossenen Hülle umgeben sind. Dies ist besonders bei verschmutzungsgefährdeten Waren wichtig, wie z.B. den in den Figuren 10 bis 18 dargestellten Glasflaschen für die spätere Getränkeabfüllung.

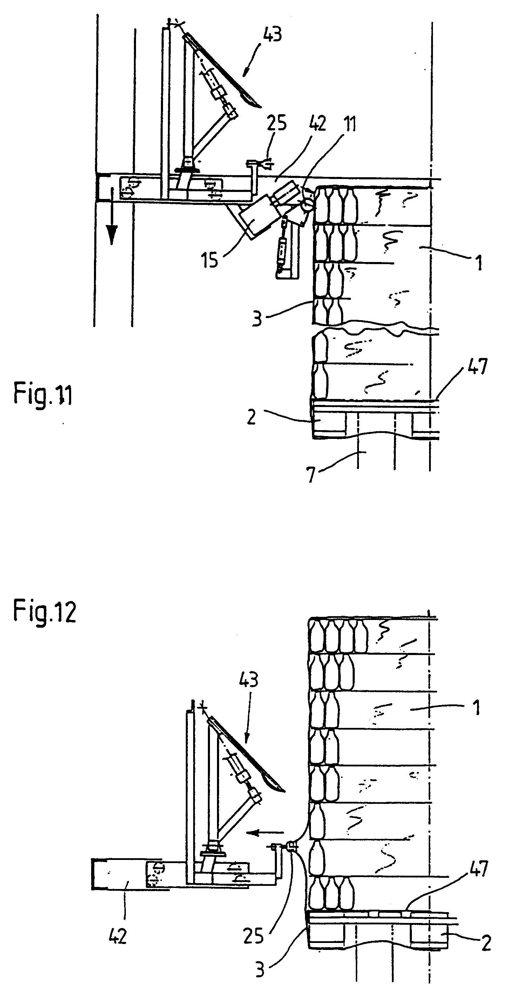

Derartige, lose in einzelnen Lagen geschichtete Waren neigen während des Transportes naturgemäß dazu, seitlich zu verrutschen. In einem ersten Verfahrensschritt, der in Fig. 11 dargestellt ist, wird daher zunächst eine seitliche Zentrierung der einzelnen Lagen des Warenstapels 1 vorgenommen. Hierzu befindet sich der Rahmen 42 zu Beginn in seiner höchsten Position, wobei die walzenförmigen Trennelemente 11 mit einer nach innen in Richtung auf den Warenstapel 1 gerichteten Kraft beaufschlagt werden. Wird nun der Rahmen 42 herabgesenkt, laufen die Walzen an den Seitenflächen des Warenstapels 1 entlang und schieben die darauf befindlichen Waren, sofern diese sich zu weit außen befinden, wieder in Richtung auf ihre vorgesehene Position. Die walzenförmigen Trennelemente 11 arbeiten in diesem Verfahrensstadium also als Ausrichtelemente. An diesem Zentrier- bzw. Ausrichtvorgang nehmen sowohl die an den Längsseiten des Warenstapels angeordneten Trennelemente 11 als auch die an den Schmalseiten angeordneten, zusätzlichen Walzen teil, so daß eine allseitige Ausrichtung stattfindet. Diese ist beendet, sobald der Rahmen 42 seine in Fig. 12 gezeigte, unterste Position erreicht hat.

In dieser Position befinden sich die Saugorgane 25 etwa 20 bis 30 cm oberhalb der Palette 2. Die Saugorgane 25 werden dann horizontal in Richtung auf den Warenstapel verfahren und dann die Saugkraft eingeschaltet. In bereits beschriebener Weise werden die Saugorgane 25 dann zurückgezogen, wobei die Folie 3 in den entsprechenden Bereichen nach außen hin aufgeweitet wird, wie dies in Fig. 12 anschaulich dargestellt ist.

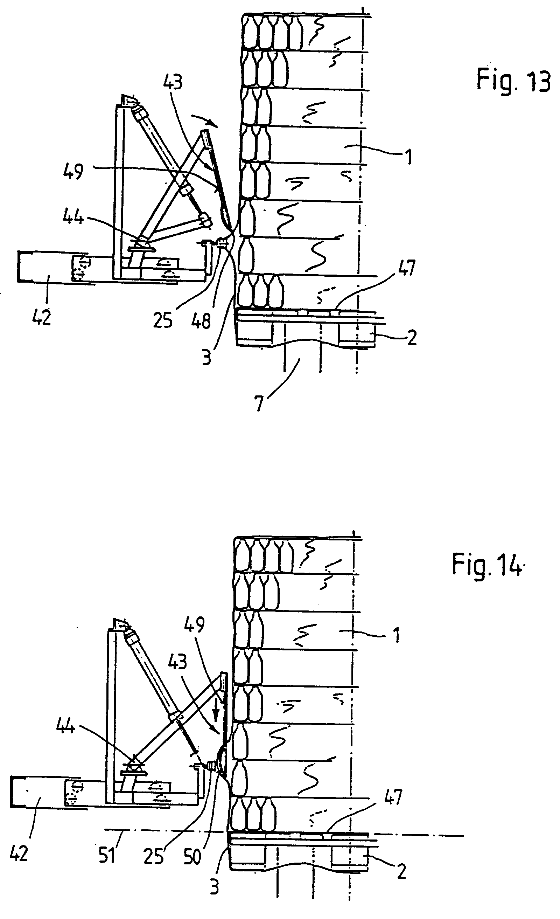

Während die Saugkraft aufrechterhalten bleibt, schwenkt die Lanze 43, wie in Fig. 13 dargestellt, in den aufgespannten Bereich der Folie 3 ein und durchsticht diese mit einer am unteren Ende der Lanze 43 ausgebildeten Schneide 48.

Nachdem die Lanze 43 die in Fig. 14 dargestellte, vertikale Ausrichtung erreicht hat, werden die Saugorgane 25 abgestellt. Die Spitze der Lanze 43 mit der Schneide 48 befinden sich nunmehr innerhalb der Folie 3, d.h. zwischen der Innenseite der Folie 3 und der Außenseite des Warenstapels 1. In dieser Stellung wird der Rahmen 42 langsam weiter abgesenkt, wobei sich die Lanzen 43 in dem Spalt zwischen Folie 3 und Warenstapel 1 nach unten bewegen. Um hierbei zu vermeiden, daß die Folie 3 reißt oder die Schneide 48 erneut die Folie 3 durchsticht, ist jede Lanze 43 an ihrer dem Warenstapel 1 abgewandten Seite als vertikale Fläche 49 ausgebildet, die nach unten hin über eine Wölbung 50 in die Schneide 48 übergeht. In der Seitenansicht ist die Lanze 43 daher ähnlich einem Löffel ausgebildet. Hierbei führt insbesondere die Wölbung 50 dazu, daß die Lanze 43 sehr gut an der Innenfläche der Folie 3 herabgleiten kann, ohne daß diese erneut zerstört oder durchstochen wird.

Um neben der Folie 3 auch die mit der Folie 3 verschweißte Bodenfolie 47 zu erfassen, fahren die Lanzen 43 mit Hilfe des Rahmens 42 so weit herab, daß die Schneiden 48 die Höhe der Trennebene 51 zwischen Warenstapel und Palette sicher durchfahren. Hierbei durchstechen die Schneiden 48 die Bodenfolie 47, ohne jedoch erneut die Folie 3 zu durchstechen und damit den Spalt zwischen Folie und Warenstapel zu verlassen.

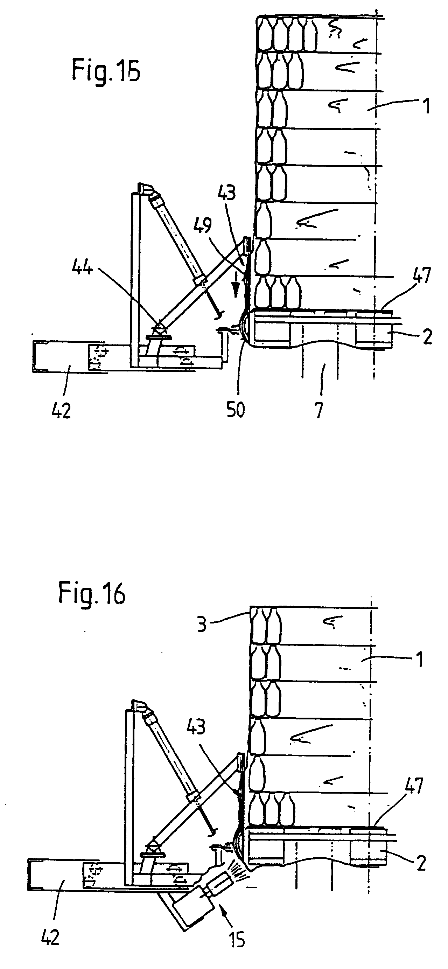

Infolge des Durchstechens der Bodenfolie 47 ist diese sowie die Verbindung zwischen Bodenfolie 47 und Folie 3 geschwächt. Außerdem arbeiten zu diesem Zeitpunkt bereits die auf die Kanten der Palette 2 gerichteten Heizelemente 15. Die Folie 3 wird hierdurch im Bereich dieser Kanten deutlich geschwächt. Wenn anschließend die Lanzen 43 gemäß Fig. 16 horizontal nach außen bewegt werden, fassen diese die Folie 3 an ihrer Innenseite, wodurch die Folie 3 im Bereich der mit Heißluft beaufschlagten Ecken der Palette 2 vollständig einreißt und sich die Bodenfolie 47 von der Folie 3 abtrennt.

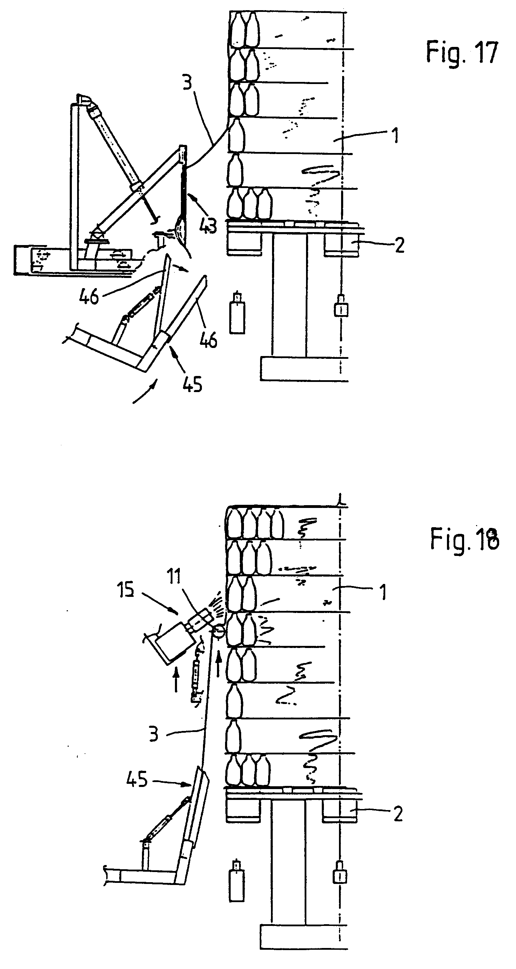

Nachdem sich die Folie 3 einmal von der Palette 2 gelöst hat, wird der untere Folienrand gemäß Fig. 17 von den Greifbacken 46 der Greifer 45 erfaßt und festgehalten. Anschließend hebt sich der Rahmen 42, so daß in bereits beschriebener Art und Weise die walzenförmigen Trennelemente 11 langsam nach oben fahren und die Folienseiten von den Seitenflächen des Warenstapels 1 trennen. Hierbei können die nach innen gerichteten Flächen der Trennelemente 11 auch die Aufgabe übernehmen, verrutschte Waren während des Hochfahrens wieder auszurichten. Auch in diesem Fall arbeiten die Trennelemente 11 zusätzlich als Ausrichtelemente. Während des Hochfahrens der Trennelemente 11 reißt die Folie 3 im Bereich der vertikalen Kanten unter der Wirkung der Heizelemente 15 ein. Die Heizelemente 15 sind hierbei so ausgerichtet, daß der Heizstrahl jeweils knapp oberhalb der Trennelemente 11 auf die vertikalen Kanten auftrifft und diese schwächt. Diese Phase des Verfahrens ist in Fig. 18 dargestellt.

Der weitere Verlauf des Verfahrens erfolgt in der anhand der Figuren 1 bis 9 bereits beschriebenen Art und Weise.

### Bezugszeichenliste

- 1: Warenstapel
- 2: Palette
- 3: Folie
- 4: Kufen
- 5: Transportbahn
- 6: Hubeinrichtung
- 7: Stütze
- 8: Greifer
- 9: Greifbacke
- 10: Öffnung
- 11: Trennelement, Ausrichtelement
- 12: Drehachse
- 13: Lagerung
- 14: Ständer
- 15: Heizelement
- 16a: Folienseite
- 16b: Folienseite
- 16c: Folienseite
- 16d: Folienseite
- 17: Platte mit Saugöffnungen
- 18: Greifeinrichtung
- 19: Oberseite
- 20: Sammelbehälter
- 21: maschinelle Einrichtung
- 22: Support
- 23: Kolben-Zylindereinheit
- 24: Schlitten
- 25: Saugorgan
- 26: Kolben-Zylindereinheit
- 27: Anschlag
- 28: Wegbegrenzer
- 29: Distanzstück
- 30: Schneide
- 31: Hauptzylinder
- 32: Rahmen
- 33: Feder
- 34: Platte
- 35: Schicht
- 36: Saugorgan
- 37: Hubzylinder
- 38: Greiforgan, Messer
- 40: Niederhalter-Stempel
- 41: Stützfuß
- 42: Rahmen
- 43: Lanze
- 44: Gelenk
- 45: Greifer
- 46: Greifbacke
- 47: Bodenfolie
- 48: Schneide
- 49: Fläche
- 50: Wölbung
- 51: Trennebene

## Patentansprüche

1. Verfahren zum Entfernen einer sichernden und/oder schützenden Folie von einem auf einer Palette und insbesondere einer Normpalette aufliegenden Warenstapel, bei dem der mit der Folie versehene Warenstapel einer Trennstation zugeführt wird, in der die Folie zunächst an mindestens einer Stelle erfaßt, dann vollständig von den Seitenflächen des Warenstapels und der Palette getrennt und schließlich einem Sammelbehälter zum Zwecke der Entsorgung zugeführt wird,
**dadurch gekennzeichnet,**
daß die Folie (3) zunächst durch Saugorgane (25) erfaßt und durch Zurückziehen der Saugorgane (25) bereichsweise von der Oberfläche des Warenstapels (1) und/oder der Palette (2) gelöst und abgehoben wird, daß anschließend mindestens ein Trennelement (11) innerhalb des Spaltes zwischen der Seitenwand des Warenstapels (1) und der Folie (3) langsam nach oben fährt und daß das Trennelement (11) während des Hochfahrens die Folie (3) zunehmend von dem Warenstapel (1) löst.

2. Verfahren nach Anspruch 1, dadurch gekennzeichnet, daß die Palette (2) mit dem aufliegenden Warenstapel (1) in der Trennstation durch eine vertikale Relativbewegung gegenüber ihrer Unterlage zumindest so weit freigestellt wird, daß die mit Folie bedeckte Unterseite der Palette (2) nicht mehr an der Unterlage anliegt.

3. Verfahren nach Anspruch 1, dadurch gekennzeichnet, daß als Trennelement (11) eine langgestreckte, drehbare Walze verwendet wird.

4. Verfahren nach Anspruch 3, dadurch gekennzeichnet, daß die Walze in den aufgeweiteten Teil der Folie (3) einfährt, und daß die Walze anschließend vertikal und über die gesamte Höhe des Warenstapels (1) verfahren wird und dabei die jeweilige Folienseite (16a, 16b, 16c, 16d) der Folie (3) vom Warenstapel (1) trennt.

5. Verfahren nach einem der Ansprüche 1 bis 4, dadurch gekennzeichnet, daß die Folie (3) während des vertikalen Verfahrens des Trennelementes (11) durch Zufuhr von Wärme im Bereich der senkrechten Kanten des Warenstapels (1) geschwächt wird.

6. Verfahren nach einem der Ansprüche 1 bis 5, dadurch gekennzeichnet, daß die jeweilige Folienseite (16a, 16b, 16c, 16d) während des vertikalen Verfahrens des Trennelementes (11) an ihrem unteren Rand festgehalten wird.

7. Verfahren nach einem der Ansprüche 1 bis 6, dadurch gekennzeichnet, daß die Folie (3) auf der Oberseite (19) des Warenstapels (1) zumindest für die Dauer des vertikalen Verfahrens des Trennelementes (11) durch einen Niederhalter (17, 34, 35) festgehalten wird.

8. Verfahren nach einem der vorangehenden Ansprüche, dadurch gekennzeichnet, daß nach Zuführen des Warenstapels (1) in die Trennstation die einzelnen Lagen des Warenstapels zunächst zentriert werden, bevor die Folie (3) von dem Warenstapel getrennt wird, oder bevor die Folie (3) schließlich ganz von dem Warenstapel entfernt wird.

9. Vorrichtung zum Entfernen einer sichernden und/oder schützenden Folie von einem auf einer Palette und insbesondere auf einer Normpalette aufliegenden Warenstapel, mit horizontal verfahrbaren Mitteln (25) zum Erfassen der Folie (3) sowie mit Trennelementen (11) zum vollständigen Trennen der Folie (3) von den Seitenflächen des Warenstapels (1),
**dadurch gekennzeichnet,**
daß die Mittel (25) Saugorgane zum Erfassen und anschließenden bereichsweisen Aufweiten der Folie (3) sind, daß die Trennelemente (11) vertikal in den Spalten zwischen den Seitenwänden des Warenstapels (1) und der Folie (3) verfahrbar sind, und daß mindestens eine Greifeinrichtung (18) vorgesehen ist, mit der sich die Folie (3) zum Zwecke der späteren Entsorgung an ihrer Oberseite als Ganzes erfassen läßt.

10. Vorrichtung nach Anspruch 9, gekennzeichnet durch drehbare, langgestreckte Walzen als Trennelemente.

11. Vorrichtung nach Anspruch 9 oder Anspruch 10, dadurch gekennzeichnet, daß nahe der Seitenflächen des Warenstapels (1) vertikal sowie horizontal verfahrbare Lanzen (43) angeordnet sind, deren nach unten gerichtetes, freies Ende als Schneide (48) zum Durchstechen oder Durchstoßen des von den Saugorganen (25) partiell aufgeweiteten Bereiches der Folie (3) ausgebildet ist.

12. Vorrichtung nach einem der vorangehenden Ansprüche, dadurch gekennzeichnet, daß an allen vier Seiten des Warenstapels (1) Greifer (8;45) zum Festhalten des unteren Randes der Folie (3) angeordnet sind.

13. Vorrichtung nach einem der vorangehenden Ansprüche, gekennzeichnet durch mindestens ein entlang der senkrechten Kanten des Warenstapels (1) verfahrbares Heizelement (15) zur Wärmebeaufschlagung der Folie (3) ausschließlich im Bereich dieser Kanten.

14. Vorrichtung nach Anspruch 13, dadurch gekennzeichnet, daß der Ort der Wärmebeaufschlagung durch das Heizelement (15) jeweils oberhalb des Trennelementes (11) liegt und Heizelement (15) sowie Trennelement (11) gemeinsam vertikal entlang des Warenstapels (1) verfahrbar ausgebildet sind.

15. Vorrichtung nach einem der vorangehenden Ansprüche, gekennzeichnet durch parallel zu den Seitenflächen des Warenstapels (1) angeordnete und an diesen entlang verfahrbare Ausrichtelemente (11) zum seitlichen Zentrieren der einzelnen Lagen des Warenstapels (1).

## Claims

1. Method for removing a securing and/or protective film from a stack of goods resting on a pallet and in particular a standard pallet, in which method the stack of goods provided with the film is fed to a separating station, in which the film is initially gripped at at least one point, is then separated completely from the side surfaces of the stack of goods and from the pallet and is finally fed to a collecting container for the purposes of disposal, characterized in that the film (3) is initially gripped by suction elements (25) and is partly detached and lifted from the surface of the stack of goods (1) and/or from the pallet (2) by withdrawing the suction elements (25), in that subsequently at least one separating element (11) travels slowly upwards inside the gap between the side wall of the stack of goods (1) and the film (3), and in that, whilst moving upwards, the separating element (11) increasingly detaches the film (3) from the stack of goods (1).

2. Method according to Claim 1, characterized in that the pallet (2) with the stack of goods (1) resting on it is freed in the separating station, by means of a vertical movement relative to its support, at least to such an extent that the underside of the pallet (2), covered with film, is no longer resting on the support.

3. Method according to Claim 1, characterized in that an elongated, rotatable roll is used as separating element (11).

4. Method according to Claim 3, characterized in that the roll moves into the spread-out part of the film (3), and in that the roll is subsequently moved vertically and over the entire height of the stack of goods (1) and, in so doing, separates the respective film side (16a, 16b, 16c, 16d) of the film (3) from the stack of goods (1).

5. Method according to one of Claims 1 to 4, characterized in that the film (3) is weakened, during the vertical movement of the separating element (11), by supplying heat in the region of the vertical edges of the stack of goods (1).

6. Method according to one of Claims 1 to 5, characterized in that the respective film side (16a, 16b, 16c, 16d) is held firmly at its lower edge during the vertical movement of the separating element (11).

7. Method according to one of Claims 1 to 6, characterized in that the film (3) is held firmly on the upper side (19) of the stack of goods (1), at least for the duration of the vertical movement of the separating element (11), by a hold-down means (17, 34, 35).

8. Method according to one of the preceding claims, characterized in that, following the feeding of the stack of goods (1) into the separating station, the individual layers of the stack of goods are initially centred before the film (3) is separated from the stack of goods, or before the film (3) is finally removed in its entirety from the stack of goods.

9. Device for removing a securing and/or protective film from a stack of goods resting on a pallet and in particular on a standard pallet, having horizontally movable means (25) for gripping the film (3) and having separating elements (11) for completely separating the film (3) from the side surfaces of the stack of goods (1), characterized in that the means (25) are suction elements for gripping and subsequently partly spreading out the film (3), in that the separating elements (11) can be moved vertically in the gaps between the side walls of the stack of goods (1) and the film (3), and in that at least one gripping device (18) is provided, with which the film (3) may be gripped as a whole at its upper side for the purpose of later disposal.

10. Device according to Claim 9, characterized by rotatable, elongated rolls as separating elements.

11. Device according to Claim 9 or Claim 10, characterized in that, close to the side surfaces of the stack of goods (1), there are arranged lances (43) which may be moved vertically and horizontally and whose downwardly directed free end is designed as a blade (48) for piercing or penetrating that portion of the film (3) partially spread out by the suction elements (25).

12. Device according to one of the preceding claims, characterized in that grippers (8; 45) for firmly holding the lower edge of the film (3) are arranged on all four sides of the stack of goods (1).

13. Device according to one of the preceding claims, characterized by at least one heating element (15) which can be moved along the vertical edges of the stack of goods (1) and is intended for applying heat to the film (3) exclusively in the region of these edges.

14. Device according to Claim 13, characterized in that the location of the application of heat by the heating element (15) is in each case located above the separating element (11), and the heating element (15) and the separating element (11) are designed such that they may be moved together vertically along the stack of goods (1).

15. Device according to one of the preceding claims, characterized by aligning elements (11) which are arranged parallel to the side surfaces of the stack of goods (1), may be moved along these and are intended for the lateral centring of the individual layers of the stack of goods (1).

## Revendications

1. Procédé destiné à retirer un film de sécurité et/ou de protection d'une pile de marchandises reposant sur une palette et notamment une palette normalisée, selon lequel la pile de marchandises pourvue du film est amenée à un poste de séparation dans lequel le film est tout d'abord saisi en au moins un endroit, puis est totalement séparé des faces latérales de la pile de marchandises et de la palette, et est finalement amené à un bac de collecte en vue de son élimination,
caractérisé en ce que le film (3) est tout d'abord saisi par des organes d'aspiration (25), et par retrait des organes d'aspiration (25), est détaché et soulevé dans certaines zones, de la surface de la pile de marchandises (1) et/ou de la palette (2), en ce qu'ensuite au moins un élément séparateur (11) se déplace lentement vers le haut à l'intérieur de l'interstice entre la paroi latérale de la pile de marchandises (1) et le film (3), et en ce que l'élément séparateur (11), durant son déplacement vers le haut, détache progressivement le film (3) de la pile de marchandises (1).

2. Procédé selon la revendication 1, caractérisé en ce que la palette (2) sur laquelle repose la pile de marchandises (1), est dégagée par rapport à son support d'appui, dans le poste de séparation, par un mouvement relatif vertical, au moins de manière telle que le côté inférieur de la palette (2) recouvert par le film, ne repose plus dur le support d'appui.

3. Procédé selon la revendication 1, caractérisé en ce qu'en guise d'élément séparateur (11) on utilise un rouleau allongé rotatif.

4. Procédé selon la revendication 3, caractérisé en ce que le rouleau s'engage dans la partie écartée du film (3), et on ce que le rouleau est ensuite déplacé verticalement et sur toute la hauteur de la pile de marchandises (1) en séparant à cette occasion le côté de film (16a, 16b, 16c, 16d) du film (3) de la pile de marchandises (1).

5. Procédé selon l'une des revendications 1 à 4, caractérisé en ce que le film (3), durant le déplacement vertical de l'élément séparateur (11), est affaibli par l'amenée de chaleur dans la zone des arêtes verticales de la pile de marchandises (1).

6. Procédé selon l'une des revendications 1 à 5, caractérisé en ce que le côté de film (16a, 16b, 16c, 16d) considéré est retenu de manière fixe à son bord inférieur, durant le déplacement vertical de l'élément séparateur (11).

7. Procédé selon l'une des revendications 1 à 6, caractérisé en ce que le film (3) est maintenu appliqué sur le côte supérieur (19) de la pile de marchandises (1) par un applicateur (17, 34, 35), au moins pour la durée du déplacement vertical de l'élément séparateur (11).

8. Procédé selon l'une des revendications précédentes, caractérisé en ce qu'après l'amenée de la pile de marchandises (1) dans le poste de séparation, les couches individuelles de la pile de marchandises sont tout d'abord centrées, avant que le film (3) ne soit séparé de la pile de marchandises, ou bien avant que le film (3) soit finalement totalement retiré de la pile de marchandises.

9. Dispositif destiné à retirer une feuille de sécurité et/ou de protection d'une pile de marchandises reposant sur une palette et notamment une palette normalisée, le dispositif comportant des moyens (25) mobiles horizontalement destinés à saisir le film (3), ainsi que des éléments séparateurs (11) pour séparer totalement le film (3) des faces latérales de la pile de marchandises (1),
caractérise en ce que les moyens (25) sont des organes d'aspiration destinés à saisir le film et ensuite à l'écarter dans certaines zones, en ce que les éléments séparateurs (11) peuvent être déplacés verticalement dans les interstices entre les parois latérales de la pile de marchandises (1) et le film (3), et en ce qu'il est prévu au moins un dispositif de préhension (18) à l'aide duquel le film (3) peut être saisi sur son côté supérieur en tant qu'ensemble, en vue de son élimination ultérieure.

10. Dispositif selon la revendication 9, caractérisé par des rouleaux allongés, rotatifs, en guise d'éléments séparateurs.

11. Dispositif selon la revendication 9 ou 10, caractérise en ce qu'à proximité des faces latérales de la pile de marchandises (1), sont disposées des lances (43) pouvant être déplacées verticalement ainsi qu'horizontalement, et dont l'extrémité libre dirigée vers le bas, est réalisée sous la forme de lame de coupe (48) pour transpercer ou perforer la zone du film (3) ayant été partiellement écartée par les organes d'aspiration (25).

12. Dispositif selon l'une des revendications précédentes, caractérisé en ce que sur tous les quatre côtés de la pile de marchandises (1) sont disposés des éléments de préhension (8; 45) destinés a retenir de manière fixe le bord inférieur du film (3).

13. Dispositif selon l'une des revendications précédentes, caractérisé par au moins un élément chauffant (15) pouvant être déplacé le long des arêtes verticales de la pile de marchandises (1), et destiné à chauffer le film (3) exclusivement dans la zone de ces arêtes.

14. Dispositif selon la revendication 13, caractérisé en ce que le lieu du chauffage par l'élément chauffant (15) se situe toujours au-dessus de l'élément séparateur (11), et l'élément chauffant (15) ainsi que l'élément séparateur (11) sont conçus de façon à pouvoir se déplacer verticalement en commun, la long de la pile de marchandises (1).

15. Dispositif seion l'une des revendications précédentes, caractérisé par des éléments d'orientation (11) disposés parallelement aux faces latérales de la pile de marchandises (1), pouvant être déplacés le long de celles-ci, et destinés au centrage latéral des couches individuelles de la pile de marchandises (1).
